# EUROPÄISCHE PATENTSCHRIFT

(11) **EP 2 780 510 B1**
(45) Veröffentlichungstag und Bekanntmachung des Hinweises auf die Patenterteilung: **17.06.2015**
(21) Anmeldenummer: 12784611.1
(22) Anmeldetag: 15.11.2012
(51) Int. Cl.: E02F 9/28, E21C 35/19, B01F 7/00, B28D 1/18, E21C 35/18, A01B 33/14, B02C 4/30

(54) **VERFAHREN ZUR VERBINDUNG VON FUNKTIONSELEMENTEN MIT EINER WELLE**
METHOD FOR CONNECTING FUNCTIONAL ELEMENTS TO A SHAFT
PROCÉDÉ PERMETTANT DE RELIER DES ÉLÉMENTS FONCTIONNELS À UN ARBRE

(30) Priorität: 16.11.2011 EP 11189327
(43) Veröffentlichungstag der Anmeldung: 24.09.2014
(73) Patentinhaber: BASF SE, 67056 Ludwigshafen (DE); LIST AG, 4422 Arisdorf (CH)
(72) Erfinder: STEPHAN, Oskar, 68766 Hockenheim (DE)
(74) Vertreter: Dr. Weiss & Arat
(86) Internationale Anmeldenummer: PCT/EP2012/072739
(87) Internationale Veröffentlichungsnummer: WO 2013/072419

(56) Entgegenhaltungen:
- EP-A1- 1 621 685
- EP-A2- 2 278 078
- US-A1- 2003 061 926

## Beschreibung

Die Erfindung bezieht sich auf ein Verfahren zur Verbindung von Funktionselementen mit einer Welle, auf eine nach dem erfindungsgemäßen Verfahren hergestellte Welle sowie auf die Verwendung dieser Welle in einem Zerkleinerer.

Vorrichtungen, wie beispielsweise Mischer, Kneter, Rührer oder Zerkleinerer umfassen Wellen, an denen verschiedene Funktionselemente aufgenommen sind. Funktionselemente sind beispielsweise Barren, Schaufeln, Arme, Haken, Zapfen, Spiralen, Paddel, Messer oder Stollen. Durch die Auswahl des Funktionselements kann die Welle an die geforderten Aufgaben angepasst werden.

In der Regel werden aufgrund der Größe und Komplexität der Teile die Funktionselemente und die Welle nicht aus einem Stück gefertigt. Daher ist es notwendig die Funktionselemente mit einem geeigneten Fügeverfahren mit der Welle zu verbinden. Zu den Fügeverfahren gehören beispielsweise Einpressen, Löten und Schweißen.

Beim Einpressen werden die beiden Fügeteile unter Krafteinwirkung elastisch verformt und ineinander gepresst. Ein ungewolltes Lösen wird durch Kraftschluss verhindert, wobei sich die beiden Fügeteile mit ausreichendem Kraftaufwand wieder voneinander trennen lassen.

Beim Löten werden die beiden Fügepartner durch Schmelzen eines Lotes miteinander verbunden. Die Schmelztemperatur des Lotes liegt dabei deutlich unterhalb der Schmelztemperatur der zu fügenden Teile.

Beim Schweißen werden die beiden Fügeteile über ihre Schmelztemperatur erhitzt, so dass sie nach dem Wiedererstarren fest miteinander verbunden sind. Gegebenenfalls kann dabei über einen Schweißzusatzstoff zusätzliches Material eingebracht werden. Durch das Verschmelzen der beiden Fügeteile lässt sich eine sehr feste stoffschlüssige Verbindung herstellen. Das Schweißen kann mit Hilfe verschiedener Techniken durchgeführt werden, beispielsweise mittels Gasschmelzschweißen, Lichtbogenschweißen oder Metallschutzgasschweißen.

Da sich durch Schweißen sehr feste stoffschlüssige Verbindungen zwischen einem Funktionselement und einer Welle schaffen lassen, werden die Schweißverfahren gegenüber anderen Fügetechniken bevorzugt. Um eine Schweißverbindung zwischen gegenüber anderen Fügetechniken bevorzugt. Um eine Schweißverbindung zwischen einem Funktionselement und einer Welle auszuführen, werden in die Welle Nuten zur Aufnahme der Funktionselemente geschnitten. Anschließend werden die Funktionselemente in die Nuten gesteckt und mit einer umlaufenden Schweißnaht mit der Welle verbunden. Nachteilig bei diesem Verfahren ist, dass die in der Nut steckenden Flächen der Bauteile nicht erreichbar sind und somit die in der Nut steckenden Flächen nicht über ein Schweißverfahren mit der Welle verbindbar sind. Zudem entsteht bei jedem Schweißvorgang eine sogenannte metallurgische Kerbe. Bei Belastung können sich ausgehend von der metallurgischen Kerbe Mikrorisse bilden, die später zu einem Bruch führen können. Problematisch ist hierbei, dass diese metallurgische Kerbe mit einer Formkerbe, die hier durch die Nut gebildet wird, zusammenfällt. Durch die Nut wird das Material an dieser Stelle geschwächt und stellt eine potentielle Bruchstelle dar. Ein Reißen der Schweißverbindung zwischen einem Funktionselement und der Welle muss jedoch verhindert werden, da dies zum Ausfall des Bauteils und damit zu einem Produktionsstillstand führt.

Aus der EP 2 278 078 ist ein Verfahren zur Befestigung eines Werkzeugs auf einer Welle bekannt, wobei ein Distanzring an die Innenkannte des Werkzeuges angeschweisst wird. Danach erfolgt ein Verschweissen des Werkzeugs mit dem angeschweissten Distanzring an die Welle.

Aus der EP 1 621 685 ist bekannt, einen Grundblock zum Halten einer Baugruppe bestehend aus dem Werkzeugträger und einem Schneidwerkzeug integral mit der Walze zu gestalten.

Aus der US 2003061926 ist bekannt, Werkzeugträger in einem Rotor durch spanendes Bearbeiten zu gestalten. Anschliessend werden die Schneiden in einer Vertiefung an die Werkzeugträger angeschraubt.

Aufgabe der Erfindung ist es, ein Verfahren zur Verbindung von Funktionselementen mit einer Welle bereitzustellen, durch das die Bruchgefahr der Schweißverbindung zwischen dem Funktionselement und der Welle vermindert wird. Dabei soll insbesondere das Zusammentreffen einer Formkerbe mit einer metallurgischen Kerbe vermieden werden. Eine weitere Aufgabe der Erfindung ist es, eine robuste Welle mit an der Welle aufgenommenen Barren für die Verwendung in einem Zerkleinerer bereitzustellen.

Gelöst wird die Aufgabe durch ein Verfahren zur Verbindung von Funktionselementen mit einer Welle, welches folgende Schritte umfasst:
(a) Ausbilden von Erhebungen zur Aufnahme der Funktionselemente, wobei die Erhebungen durch Materialabtrag aus der Welle herausgearbeitet werden,
(b) Verschweißen der Funktionselemente mit den Erhebungen auf der Welle.

Im ersten Verfahrensschritt (a) wird die Welle für den folgenden Schweißvorgang vorbereitet. Dazu werden durch Abtragen von Material aus der Welle Erhebungen herausgearbeitet. Der Materialabtrag kann mit jedem geeigneten, dem Fachmann bekannten, Verfahren ausgeführt werden. Geeignete Verfahren umfassen spanende Verfahren wie beispielsweise Fräsen und Drehen. Ebenfalls möglich Ist das Fertigen der Welle mit auf dieser ausgebildeten Erhebungen durch ein Urformverfahren, beispielsweise Gießen. Eine weitere Möglichkeit Ist die Anwendung eines Umformverfahrens zur Ausbildung der Erhebungen, beispielsweise Schmieden. Auf diese Weise lassen sich die einzelnen Erhebungen und die Welle aus einem Stück fertigen. Dadurch lässt sich die Ausbildung einer metallurgischen Kerbe an der Oberfläche der Welle, wie sie beim Anschweißen einer Erhebung entstehen würde, vermeiden. Des Weiteren muss an der Oberfläche der Welle keine Nut ausgebildet werden, wodurch ebenfalls eine Schwächung der Welle an dieser Stelle vermieden wird.

Im nächsten Verfahrensschritt werden die Funktionselemente mit den Erhebungen auf der Welle verschweißt. Funktionselemente sind beispielsweise Barren, Schaufeln, Arme, Haken, Zapfen, Spiralen, Paddel, Messer oder Stollen. Die Schweißung wird dabei als Stumpfstoß ausgeführt, bei der die Stirnflächen der zu verbindenden Teile direkt aufeinander stoßen. Die sich bei der Schweißverbindung ausbildende metallurgische Kerbe befindet sich auf diese Weise zwischen der Erhebung und dem Funktionselement und liegt nicht mehr direkt an der Oberfläche der Welle. Ein Zusammenfallen einer metallurgischen Kerbe mit einer durch die Geometrie beziehungsweise Form vorgegebene Formkerbe wird damit vermieden. Ein weiterer Vorteil ist die bessere Zugänglichkeit der entstehenden Schweißnaht. Eine Schweißnaht zwischen einer Erhebung und einem Funktionselement ist über einen Öffnungswinkel von etwa 180° zugänglich. Eine Schweißnaht hingegen, die direkt auf der Oberfläche der Welle liegt, ist nur mit einem Öffnungswinkel von etwa 90° zugänglich.

Die bessere Zugänglichkeit ermöglicht ein Verschweißen der Funktionselemente mit den Erhebungen auf der Welle in Vollanschluss. Dabei werden die aufeinander treffenden Bereiche der Erhebung und des Funktionselements vollständig miteinander verschweißt und eine lückenlose stoffschlüssige Verbindung erzeugt. Dies ermöglicht im belasteten Zustand der Funktionselemente einen optimalen Kraftfluss über die gesamte Fläche, an denen die Funktionselemente mit den Erhebungen zusammentreffen.

Die Schweißnaht zwischen einer Erhebung und einem Funktionselement kann mit jeder geeigneten, dem Fachmann bekannten Nahtführung erfolgen. Beispielsweise kann die Naht als X-Naht, Doppel-Y-Naht, Doppel-U-Naht, oder Doppel-V-Naht ausgeführt werden. Bei Ausführung der Schweißverbindung als Vollanschluss wird für die Nahtführung eine X-Naht bevorzugt. Ein Kriterium für die Wahl der optimalen Nahtführung sind die geometrischen Abmessungen des Funktionselements und/oder der Erhebung. Vor der Ausführung der Naht werden die Erhebungen der Welle und/oder die Funktionselemente vorbereitet. Dabei wird beispielsweise durch Schneiden oder Schleifen die Nahtform vorbereitet. Dabei ist es bevorzugt, dass die Erhebungen der Welle und/oder die Funktionselemente bei der Nahtvorbereitung kerbarm, das heißt unter Vermeidung von Formkerben, angeschliffen werden. Dadurch werden mögliche Ausgangspunkte für Risse vermieden.

In einer bevorzugten Ausführungsform des Verfahrens werden die Schweißnähte nach dem Verschweißen mit Ultraschall, Röntgenstrahlen, Farbeindringprüfungen und/oder einem anderen zerstörungsfreien Untersuchungsverfahren überprüft. Dadurch kann sichergestellt werden, dass die Schweißnaht in der erforderlichen Qualität ausgeführt wurde. Dabei wirkt sich wiederum die besonders gute Zugänglichkeit der Schweißnaht positiv aus.

Die Wahl des Materials, aus dem die Funktionselemente und/oder die Welle gefertigt sind, hat einen großen Einfluss auf die spätere Haltbarkeit der Welle. Deswegen ist es bevorzugt, die Welle und/oder die Funktionselemente aus einem Duplexstahl zu fertigen. Duplex-Stähle zeichnen sich dadurch aus, dass sie eine hohe Festigkeit bei gleichzeitig hoher Duktilität aufweisen. Geeignete Stähle sind beispielsweise der Duplexstahl 1.4462, der Duplexstahl 1.4362 oder andere hochfeste schweißbare Stähle.

Bevorzugt werden die Welle und die Funktionselemente aus dem gleichen Material gefertigt. Besonders bevorzugt werden beide aus einem Duplexstahl gefertigt.

Beim Ausführen der Schweißnähte kann ein Schweißzusatz verwendet werden. Dabei ist es bevorzugt, dass der Schweißzusatz mit dem Material der Welle und/oder der Funktionselemente identisch ist. In einer bevorzugten Variante des Verfahrens werden sowohl für die Welle und die Funktionselemente als auch für den Schweißzusatz dasselbe Material verwendet.

Eine durch das vorstehend beschriebene Verfahren hergestellte Welle weist Erhebungen auf, an denen Funktionselemente durch Verschweißen aufgenommen sind, wobei die Erhebungen und die Welle einstückig ausgeführt sind. Durch die Funktionselemente lässt sich die Welle an die benötigten Anforderungen anpassen. Funktionselemente sind beispielsweise Barren, Schaufeln, Arme, Haken, Zapfen, Spiralen, Paddel, Messer oder Stollen.

Aufgrund der bereits beschriebenen positiven Eigenschaften ist es bevorzugt, dass die Welle und/oder die Funktionselemente aus Duplexstahl gefertigt sind, beispielsweise aus dem Duplexstahl 1.4462 oder dem Duplexstahl 1.4362.

In einer Ausführungsform der Welle sind die Welle und die Funktionselemente aus dem gleichen Material gefertigt.

Die Welle wird vorzugsweise in einem Zerkleinerer verwendet. Je nach zu zerkleinerndem Material und abhängig davon, ob dieses Material gemahlen, zerdrückt, zerschnitten, gehäckselt, zerschlagen oder zerrieben werden soll, werden geeignete Funktionselemente ausgewählt.

Nach dem erfindungsgemäßen Verfahren hergestellte Wellen lassen sich in allen Vorrichtungen einsetzen, in denen Wellen mit darauf befestigten Funktionselementen aufgenommen sind, wie beispielsweise Mischer, Kneter, Rührer oder Zerkleinerer.

Besonders bevorzugt wird die Welle in Vorrichtungen zur Herstellung von Superabsorbern, beispielsweise im Mischkneter und im Kreuzflügelzerkleinerer, eingesetzt. Superabsorber sind Polymere, die ein Vielfaches ihres Eigengewichts an Flüssigkeit aufnehmen können. Superabsorber werden im Allgemeinen in Form eines grobkörnigen Pulvers beispielsweise in Windeln, Verbandsmaterialien, verschiedenen Hygieneartikeln, usw. eingesetzt. Zu den Superabsorbern gehören insbesondere Poly(meth)acrylate.

Zur Herstellung der Poly(meth)acrylate werden eine Monomerlösung und ein Initiator als Edukte in einen Mischkneter eingegeben. Ein solcher Mischkneter umfasst beispielsweise zwei achsparallele, rotierenden Wellen, auf deren Oberflächen Scheibenflächen mit an ihrem Umfang angeordneten Knetbarren aufgenommen sind. Durch den Mischkneter werden die Edukte durchmischt und aus den Edukten wird in einer Polymerisierungsreaktion als Produkt Poly(meth)acrylat erzeugt. Das Produkt wird durchgeknetet und anschließend zerrissen und zerkleinert.

Das Poly(meth)acrylat verlässt den Mischkneter in Form von Klumpen mit gelartiger Konsistenz. Die Gelklumpen gelangen in einen Gelbunker, von dem aus sie mit einem Schwenkband auf einen Bandtrockner aufgetragen werden. Durch den Bandtrockner wird den Gelklumpen bei einer Temperatur von etwa 200°C Flüssigkeit entzogen. Die getrockneten Poly(meth)acrylatklumpen gelangen anschließend in einen als Kreuzflügelzerkleinerer ausgeführten Zerkleinerer.

Dieser Kreuzflügelzerkleinerer umfasst eine Welle, an der eine Vielzahl von Barren aufgenommen sind. Neben den auf der Welle angeordneten Barren umfasst der Kreuzflügelzerkleinerer eine Vielzahl fest montierter Barren, die in Zwischenräume der auf der Welle angeordneten Barren eingreifen. Die in den Zerkleinerer eingegebenen Poly(meth)acrylat-Klumpen fallen auf die fest montierten Barren und bleiben auf diesen liegen. Durch die sich mit der Welle mitdrehenden Barren werden die Klumpen zerschlagen.

Nach dem Passieren des Kreuzflügelzerkleinerers wird das grob zerkleinerte Poly(meth)acrylat über ein pneumatisches Transportsystem einer Mühle zugeführt. Dort werden die Poly(meth)acrylate weiter zermahlen bis das Produkt in Form eines Pulvers entsteht.

Zum Zerschlagen von Klumpen aus Poly(meth)acrylaten in einem Zerkleinerer sind beispielsweise Barren als Funktionselemente geeignet. Die Barren weisen eine Quaderform auf, wobei der Barren im Verhältnis zu seiner Länge nur eine geringe Dicke und kleine Stirnfläche aufweist. Dieser Barren wird bei der Herstellung der Welle an seiner Stirnfläche mit einer Erhebung der Welle durch Schweißen verbunden. Dabei kann die Fläche der Erhebung mit der Stirnfläche des Barrens übereinstimmen, es sind jedoch auch Ausführungsformen möglich, bei denen die Fläche der Funktionselemente größer ist, als die Stirnfläche des Barrens. Die mit den Barren versehene Welle wird zur Zerkleinerung der Poly(meth)acrylate in einen Kreuzflügelzerkleinerer eingesetzt. In den Kreuzflügelzerkleinerer sind neben den auf der sich drehenden Welle angeordneten Barren auch festmontierte Barren angeordnet. Werden Poly(meth)acrylat-Klumpen in den Kreuzflügelzerkleinerer eingegeben, werden diese zwischen den festmontierten und denen sich mit der Welle drehenden Barren zerschlagen. Durch die besondere Ausführung der Schweißnähte weist die erfindungsgemäße Welle eine besonders hohe Zuverlässigkeit und Lebensdauer auf.

Anhand der Zeichnungen wird die Erfindung nachstehend eingehender beschrieben.

Es zeigt:
- Figur 1: eine Welle mit aus dieser herausgearbeiteten Erhebungen, an die als Barren ausgeführte Funktionselemente angeordnet wurden,
- Figur 2: ein durch Schweißen mit einer Erhebung auf der Welle verbundenes Funktionselement in einer Schnittdarstellung von der Seite,
- Figur 3: ein durch Schweißen mit einer Erhebung auf der Welle verbundenes Funktionselement in einer Schnittdarstellung von vorne,
- Figur 4: eine schematische Darstellung des Produktionsprozesses von Poly(meth)acrylaten.

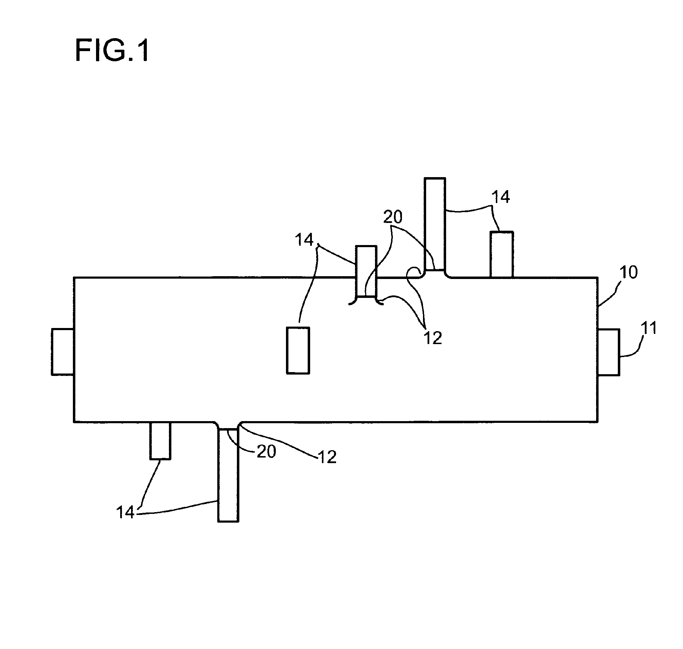

Figur 1 zeigt eine Welle mit aus der Welle herausgearbeiteten Erhebungen, an denen Funktionselemente mit der Welle verbunden sind.

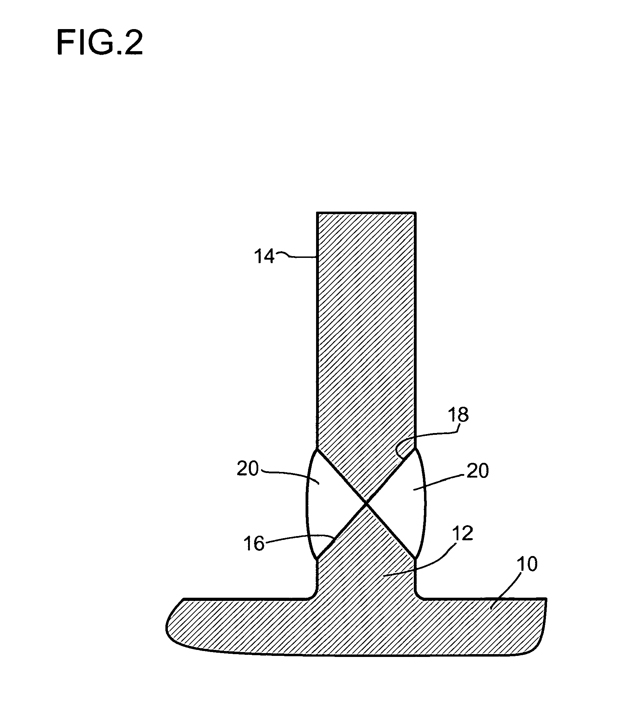

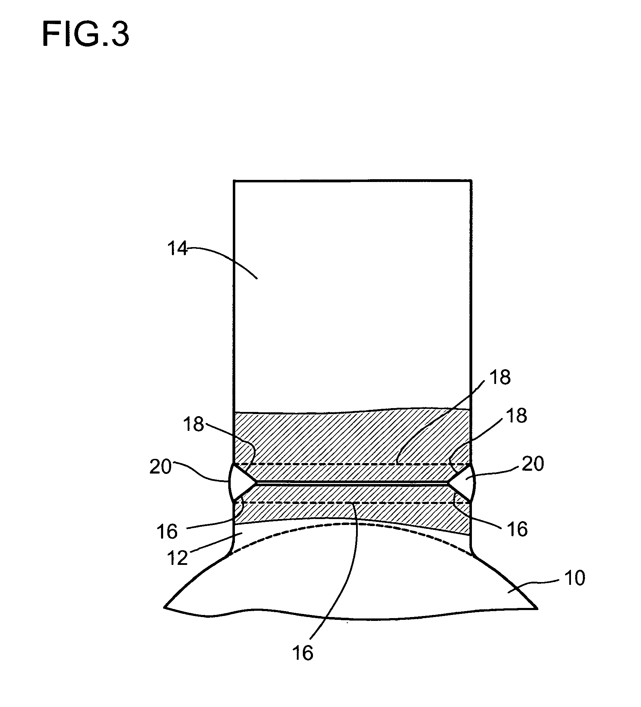

In Figur 1 ist eine im Wesentlichen kreiszylinderförmige Welle 10 dargestellt. An den Stirnflächen der Welle befindet sich jeweils ein Zapfen 11, mit dem die Welle in ein Lager aufgenommen werden kann. Auf der Mantelfläche der Welle 10 verteilt befinden sich Erhebungen 12. Die Erhebungen 12 und die restliche Welle 10 wurden aus einem Stück gefertigt. An jeder Erhebung 12 ist ein Funktionselement aufgenommen, welche in der in Figur 1 dargestellten Ausführungsform als Barren 14 ausgeführt sind. Die Barren 14 sind im Wesentlichen quaderförmig, wobei die längste Seite senkrecht zur Achse der Welle 10 auf den Erhebungen 12 angeordnet ist. Die Barren 14 sind mit den Erhebungen 12 verschweißt. Die Schweißnähte 20 werden in Figuren 2 und 3 detaillierter dargestellt.

Figur 2 zeigt ein Funktionselement, welches über eine Schweißnaht mit einer Erhebung der Welle verbunden ist in einer Schnittdarstellung von der Seite.

In Figur 2 ist eine Erhebung 12 dargestellt, welche durch Materialabtrag aus einer Welle 10 herausgearbeitet wurde. Die Erhebung 12 und die Welle 10 sind dadurch einstückig ausgeführt. Ein Funktionselement, welches als Barren 14 ausgeführt ist, ist über eine Schweißnaht 20 mit der Erhebung 12 verbunden. In der in Figur 2 dargestellten Ausführungsform ist die Schweißnaht 20 zur Verbindung des Barrens 14 mit der Erhebung 12 der Welle als X-Naht ausgeführt. Zur Ausbildung der X-Form der Naht wurden die Flächen 18 des Barrens 14 sowie die Flächen 16 der Erhebung 12 angeschliffen. Durch diese Ausgestaltung der Schweißnaht 20 wird der Barren 14 mit der Erhebung 12 im Vollanschluss verbunden, das heißt, über die gesamte Querschnittsfläche des Barrens 14 ist eine stoffschlüssige Verbindung mit der Erhebung 12 hergestellt. Dadurch wird ein optimaler Kraftfluss bei Belastung gewährleistet. In weiteren Ausführungsformen der Erfindung kann in Abhängigkeit von den Abmessungen des Funktionselements beziehungsweise des Barrens 14 auch eine andere Ausführung der Schweißnaht 20 angewendet werden. Weiter Beispiele für eine Ausführung der Schweißnaht 20 sind V-Nähte, U-Nähte, Doppel-U-Nähte oder eine Doppel-V-Naht.

Figur 3 zeigt einen Barren 14, der mit einer Erhebung 12 über eine Schweißnaht 20 verbunden ist, in einer Schnittdarstellung von vorne.

In Figur 3 ist ein als Barren 14 ausgebildetes Funktionselement dargestellt, welches über eine Schweißnaht 20 mit einer Erhebung 12 verbunden ist. Die Erhebung 12 ist durch Materialabtrag aus der Welle 10 herausgearbeitet. Dadurch sind die Erhebung 12 und die Welle 10 einstückig ausgeführt. Wie der Darstellung in Figur 3 entnommen werden kann, sind jeweils am Barren 14 und an der Erhebung 12 die Schweißnahtvorbereitungen an allen vier Seiten ausgeführt. Dazu wurde der Barren 14 mit den Anschliffen 18 und die Erhebung 12 mit den Anschliffen 16 versehen. In Verbindung mit einer X-Naht, wie sie in Figur 2 dargestellt ist, kann eine vollständige stoffschlüssige Verbindung zwischen den Barren 14 und der Erhebung 12 hergestellt werden.

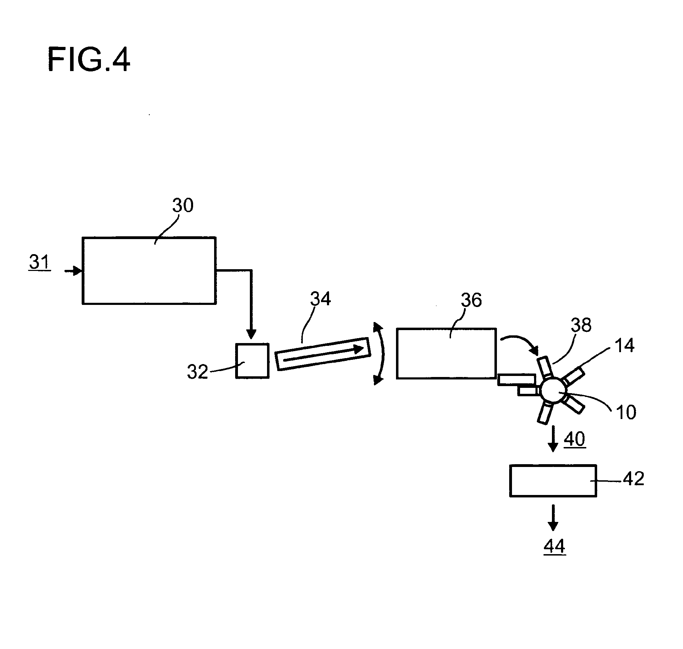

Figur 4 zeigt eine schematische Darstellung eines Herstellungsprozesses für Poly(meth)acrylate.

Der schematischen Darstellung in Figur 4 kann der Ablauf eines Herstellungsverfahrens für Poly(meth)acrylate entnommen werden. Die Edukte 31 zur Herstellung der Poly(meth)acrylate werden in einen Mischkneter 30 eingegeben. Der Mischkneter 30 umfasst beispielsweise zwei achsparallele, rotierenden Wellen, auf deren Oberflächen Scheibenflächen mit an ihrem Umfang angeordneten Knetbarren aufgenommen sind. In einer Polymerisierungsreaktion wird als Produkt Poly(meth)acrylat erzeugt, welches den Mischkneter 30 in Form von Klumpen mit gelartiger Konsistenz verlässt.

Die Gelklumpen gelangen in einen Gelbunker 32, von dem aus sie mit einem Schwenkband 34 auf einen Bandtrockner 36 aufgetragen werden. Durch den Bandtrockner 36 wird den Gelklumpen bei einer Temperatur von etwa 200°C Flüssigkeit entzogen. Die getrockneten Poly(meth)acrylatklumpen gelangen anschließend in einen als Kreuzflügelzerkleinerer ausgeführten Zerkleinerer.

Dieser Kreuzflügelzerkleinerer 38 umfasst eine Welle 10, an der eine Vielzahl von Barren 14 aufgenommen sind. Die Barren 14 wurden mit der Welle 10 mit Hilfe des erfindungsgemäßen Verfahrens verschweißt. Neben den auf der Welle 10 angeordneten Barren 14 umfasst der Kreuzflügelzerkleinerer eine Vielzahl fest montierter Barren, die in Zwischenräume der auf der Welle 10 angeordneten Barren 14 eingreifen. Die in den Zerkleinerer 38 eingegebenen Poly(meth)acrylat-Klumpen fallen auf die fest montierten Barren und bleiben auf diesen liegen. Durch die sich mit der Welle 10 mitdrehenden Barren 14 werden die Klumpen zerschlagen.

Nach dem Passieren des Kreuzflügelzerkleinerers 38 wird das grob zerkleinerte Poly(meth)acrylat über ein pneumatisches Transportsystem 40 einer Mühle 42 zugeführt. Dort werden die Poly(meth)acrylate weiter zermahlen bis das Produkt 44 in Form eines Pulvers entsteht.

Neben dem hier beispielhaft genannten Verfahren zur Herstellung von Poly(meth)acrylaten lassen sich nach dem erfindungsgemäßen Verfahren hergestellte Wellen in allen Vorrichtungen einsetzen, in denen Wellen mit darauf befestigten Funktionselementen aufgenommen sind, wie beispielsweise Mischer, Kneter, Rührer oder Zerkleinerer. Beim Verfahren zur Herstellung von Poly(meth)acrylaten kann die erfindungsgemäße Welle auch im Mischkneter 30 eingesetzt werden. In diesem Fall werden Scheiben mit an ihrem Umfang angeordneten Knetbarren als Funktionselemente ausgewählt und mit der Welle gemäß dem erfindungsgemäßen Verfahren verschweißt.

### Bezugszeichenliste

- 10: Welle
- 11: Zapfen
- 12: Erhebung
- 13: Stirnfläche Erhebung
- 14: Funktionselement / Barren
- 15: Stirnfläche Barren
- 16: Anschliff / Schweißvorbereitung Erhebung
- 18: Anschliff / Schweißvorbereitung Barren
- 20: Schweißnaht
- 30: Reaktor / Kneter
- 31: Edukt
- 32: Gelbunker
- 34: Schwenkband
- 36: Bandtrockner
- 38: Kreuzflügelzerkleinerer
- 40: Pneumatischer Transport
- 42: Mühlen
- 44: Produkt

## Patentansprüche

1. Verfahren zur Verbindung von Funktionselementen (14) mit einer Welle (10) umfassend folgende Schritte:
(a) Ausbilden von Erhebungen (12) zur Aufnahme der Funktionselemente (14), wobei die Erhebungen (12) durch Materialabtrag aus der Welle (10) herausgearbeitet werden,
(b) Verschweißen der Funktionselemente (14) mit den Erhebungen (12) auf der Welle (10).

2. Verfahren nach Anspruch 1, **dadurch gekennzeichnet, dass** das Verschweißen der Funktionselemente (14) mit den Erhebungen (12) auf der Welle (10) im Vollanschluss erfolgt.

3. Verfahren nach Anspruch 1 oder 2, **dadurch gekennzeichnet, dass** die Erhebungen (12) der Welle und/oder die Funktionselemente (14) bei der Schweißvorbereitung kerbarm angeschliffen werden.

4. Verfahren einem der Ansprüche 1 bis 3, **dadurch gekennzeichnet, dass** das Verschweißen der Funktionselemente (14) mit den Erhebungen (12) der Welle (10) mit einer X-Naht, Doppel-U-Naht, Doppel-Y-Naht oder Doppel-V-Naht ausgeführt wird.

5. Verfahren nach einem der Ansprüche 1 bis 4, **dadurch gekennzeichnet, dass** die Schweißnähte (20) nach dem Verschweißen mit Ultraschall, Röntgen, Farbeindringprüfung und/oder einem anderen zerstörungsfreien Untersuchungsverfahren überprüft werden.

6. Verfahren nach einem der Ansprüche 1 bis 5, **dadurch gekennzeichnet, dass** die Welle (10) und/oder die Funktionselemente (14) aus einem Duplexstahl gefertigt werden.

7. Verfahren nach Anspruch 6, **dadurch gekennzeichnet, dass** die Welle (10) und/oder die Funktionselemente (14) aus Duplexstahl 1.4462, Duplexstahl 1.4362 oder einem anderen hochfesten schweißbaren Stahl gefertigt werden.

8. Verfahren nach einem der Ansprüche 1 bis 7, **dadurch gekennzeichnet, dass** die Welle (10) und die Funktionselemente (14) aus dem gleichen Material gefertigt werden.

9. Verfahren nach einem der Ansprüche 1 bis 8, **dadurch gekennzeichnet, dass** beim Verschweißen der Funktionselemente (14) mit den Erhebungen (12) der Welle (10) ein Schweißzusatz verwendet wird, wobei der Schweißzusatz bevorzugt identisch mit dem Material der Welle (10) und/oder der Funktionselemente (14) ist.

10. Welle (10), hergestellt nach einem Verfahren gemäß einem der Ansprüche 1 bis 9, wobei die Welle (10) Erhebungen (12) aufweist an denen Funktionselemente (14) durch Verschweißen aufgenommen sind, **dadurch gekennzeichnet, dass** die Erhebungen (12) und die Welle (10) einstückig ausgeführt sind.

11. Welle (10) nach Anspruch 10, **dadurch gekennzeichnet, dass** die Welle (10) und/oder die Funktionselemente (14) aus Duplexstahl gefertigt sind.

12. Welle (10) nach Anspruch 11, **dadurch gekennzeichnet, dass** die Welle (10) und/oder die Funktionselemente (14) aus Duplexstahl 1.4462, Duplexstahl 1.4362 oder einem anderen hochfesten schweißbaren Stahl gefertigt sind.

13. Welle (10) nach einem der Ansprüche 10 bis 12, **dadurch gekennzeichnet, dass** die Welle (10) und die Funktionselemente (14) aus dem gleichen Material gefertigt sind.

14. Verwendung einer Welle (10) nach einem der Ansprüche 10 bis 13 in einem Zerkleinerer (38).

15. Verwendung einer Welle (10) gemäß Anspruch 14, wobei der Zerkleinerer (38) ein Zerkleinerer für Poly(meth)acrylate ist.

## Claims

1. A method of connecting functional elements (14) to a shaft (10) comprising the following steps:
a. formation of protruberances (12) to receive the functional elements (14), wherein the protruberances (12) are machined from the shaft (10) by material removal,
b. welding of the functional elements (14) to the protruberances (12) on the shaft (10).

2. A method according to claim 1, **characterized in that** the welding of the functional elements (14) to the protruberances (12) on the shaft (10) takes place as a full-depth weld.

3. A method according to claim 1 or 2, **characterized in that** the protruberances (12) of the shaft and/or the functional elements (14) are ground to have few notches during the welding preparation.

4. A method according to any one of claims 1 to 3, **characterized in that** the welding of the functional elements (14) to the protruberances (12) of the shaft (10) is executed with an X seam, a double-U seam, a double-Y seam or a double-V seam.

5. A method according to any one of claims 1 to 4, **characterized in that** the weld seams (20) are checked after welding using ultrasound, X-rays, a dye penetration test and/or another nondestructive examination procedure.

6. A method according to any one of claims 1 to 5, **characterized in that** the shaft (10) and/or the functional elements (14) are manufactured from a duplex steel.

7. A method according to claim 6, **characterized in that** the shaft (10) and/or the functional elements (14) are manufactured from duplex steel 1.4462, duplex steel 1.4362 or another high-strength, weldable steel.

8. A method according to any one of claims 1 to 7, **characterized in that** the shaft (10) and the functional elements (14) are manufactured from the same material.

9. A method according to any one of claims 1 to 8, **characterized in that** a filler is used upon welding of the functional elements (14) to the protruberances (12) of the shaft (10), wherein the filler is preferably identical with the material of the shaft (10) and/or the functional elements (14).

10. A shaft (10), manufactured according to a method according to any one of claims 1 to 9, wherein the shaft (10) has protruberances (12) on which functional elements (14) are received by welding, **characterized in that** the protruberances (12) and the shaft (10) are in one piece.

11. A shaft (10) according to claim 10, **characterized in that** the shaft (10) and/or the functional elements (14) are manufactured from duplex steel.

12. A shaft (10) according to claim 11, **characterized in that** the shaft (10) and/or the functional elements (14) are manufactured from duplex steel 1.4462, duplex steel 1.4362 or another high-strength, weldable steel.

13. A shaft (10) according to any one of claims 10 to 12, **characterized in that** the shaft (10) and the functional elements (14) are manufactured from the same material.

14. Use of a shaft (10) according to any one of claims 10 to 13 in a comminutor (38).

15. Use of a shaft (10) according to claim 14, wherein the comminutor (38) is a comminutor for poly(meth)acrylates.

## Revendications

1. Procédé permettant de relier des éléments fonctionnels (14) à un arbre (10), comprenant les étapes suivantes consistant à:
(a) former des bosses (12) destinées à recevoir les éléments fonctionnels (14), les bosses (12) étant usinées par enlèvement de matière de l'arbre (10),
(b) assembler par soudage les éléments fonctionnels (14) avec les bosses (12) sur l'arbre (10).

2. Procédé selon la revendication 1, **caractérisé en ce que** l'assemblage par soudage des éléments fonctionnels (14) avec les bosses (12) sur l'arbre (10) a lieu par raccordement complet.

3. Procédé selon la revendication 1 ou 2, **caractérisé en ce que** les bosses (12) de l'arbre et/ou les éléments fonctionnels (14) sont polis sans encoches lors la préparation de soudage.

4. Procédé selon l'une des revendications 1 à 3, **caractérisé en ce que** l'assemblage par soudage des éléments fonctionnels (14) avec les bosses (12) de l'arbre (10) est réalisé par un cordon de soudure en X, un cordon de soudure en double U, un cordon de soudure en double Y ou un cordon de soudure en double V.

5. Procédé selon l'une des revendications 1 à 4, **caractérisé en ce que** les cordons de soudure (20) sont contrôlés, après l'assemblage par soudage, par ultrasons, rayons X, pénétration de couleur et/ou un autre procédé de contrôle non destructif.

6. Procédé selon l'une des revendications 1 à 5, **caractérisé en ce que** l'arbre (10) et/ou les éléments fonctionnels (14) sont fabriqués en acier duplex.

7. Procédé selon la revendication 6, dans lequel l'arbre (10) et/ou les éléments fonctionnels (14) sont fabriqués en acier duplex 1.4462, en acier duplex 1.4362 ou en un autre acier soudable à haute résistance.

8. Procédé selon l'une des revendications 1 à 7, **caractérisé en ce que** l'arbre (10) et les éléments fonctionnels (14) sont fabriqués dans le même matériau.

9. Procédé selon l'une des revendications 1 à 8, **caractérisé en ce que**, lors de l'assemblage par soudage des éléments de fonction (14) avec les bosses (12) de l'arbre (10), il est utilisé une additif de soudage, l'additif de soudage étant de préférence identique au matériau de l'arbre (10) et/ou des éléments fonctionnels (14).

10. Arbre (10) fabriqué par un procédé selon l'une des revendications 1 à 9, dans lequel l'arbre (10) présente des bosses (12) sur lesquelles sont reçus des éléments fonctionnels (14) par assemblage par soudage, **caractérisé en ce que** les bosses (12) et l'arbre (10) sont réalisés d'une seule pièce.

11. Arbre (10) selon la revendication 10, **caractérisé en ce que** l'arbre (10) et/ou les éléments fonctionnels (14) sont fabriqués en acier duplex.

12. Arbre (10) selon la revendication 11, **caractérisé en ce que** l'arbre (10) et/ou les éléments fonctionnels (14) sont fabriqués en acier duplex 1.4462, en acier duplex 1.4362 ou en un autre acier soudable à haute résistance.

13. Arbre (10) selon l'une des revendications 10 à 12, **caractérisé en ce que** l'arbre (10) et les éléments fonctionnels (14) sont fabriqués dans le même matériau.

14. Utilisation d'un arbre (10) selon l'une des revendications 10 à 13, dans un broyeur (38).

15. Utilisation d'un arbre (10) selon la revendication 14, dans laquelle le broyeur (38) est un broyeur pour poly(méth)acrylates.
